# EUROPEAN PATENT APPLICATION

(11) **EP 2 149 682 A1**
(43) Date of publication of application: **03.02.2010**
(21) Application number: 09165813.8
(22) Date of filing: 17.07.2009
(51) Int. Cl.: F01K 9/00, F01K 11/02, F01K 19/10, F01K 23/10, F28D 15/02, F28B 1/00

(54) **Condenser for a combined cycle power plant**

(30) Priority: 29.07.2008 US 181741
(71) Applicant: General Electric Company, Schenectady, NY 12345 (US)
(72) Inventor: Zhang, Hua, Greer, SC 29650 (US); Ranasinghe, Jatila, Simpsonville, SC 29681 (US); Ball, Jr., David Wesley, Easley, SC 29642 (US)
(74) Representative: Gray, Thomas

(57) **Abstract**

A combined cycle power plant (2) includes a steam turbine section (40, 50, 64) having an inlet section (45, 56, 68) and an outlet section (47, 58, 70). The steam turbine section (40, 50, 64) passes steam from the inlet section (45, 50, 64) toward the outlet section (47, 55, 70). The combined cycle power plant (2) also includes a condenser (100) fluidly connected to the outlet section (47, 50, 64) of the steam turbine section (40, 50, 64). The condenser (100) includes a plurality of heat pipes (146) configured to extract latent heat from steam passing from the steam turbine section (40, 50, 64) to form condensed water.

## Description

### BACKGROUND OF THE INVENTION

Exemplary embodiments of the present invention relate to the art of combined cycle power plants and, more particularly, to a condenser for a steam turbine portion of a combined cycle power plant.

Conventional combined cycle power plants employ a gas turbine system operatively coupled to a steam turbine system. The gas turbine system includes a compressor coupled to a gas turbine. The steam turbine system includes a high pressure turbine (HP) portion operatively coupled to an intermediate pressure (IP) turbine portion that, in turn is coupled to low pressure (LP) turbine. The LP turbine is employed to drive, for example, a generator. In a typical combined cycle power plant, exhaust gas from the steam turbine, typically in the form of steam, is passed to a cooling system, onto a bottoming cycle and back to a heat recovery steam generator to be reheated and passed back to the steam turbine. A large amount of latent heat must be removed from the exhaust gas in to condense the steam back to water.

Conventional cooling systems employ water to remove the latent heat from the exhaust/steam through a water-to-steam heat exchanger. Once condensed, a large cooling tower or a large water reservoir is required to cool/store the water. In places that lack water, a steam-to-air heat exchanger is used. Steam-to-air heat exchangers are less efficient that water-to-steam heat exchangers and require a large footprint.

### BRIEF DESCRIPTION OF THE INVENTION

In accordance with one exemplary embodiment of the invention, a combined cycle power plant includes a steam turbine section having an inlet section and an outlet section. The steam turbine section passes steam from the inlet section toward the outlet section. The combined cycle power plant also includes a condenser fluidly connected to the outlet section of the steam turbine section. The condenser includes a plurality of heat pipes configured to extract latent heat from steam passing from the steam turbine section to form condensed water.

In accordance with another exemplary embodiment of the invention, a method of extracting latent heat from a steam flow passing from a steam turbine section includes passing the steam flow from the steam turbine section, guiding the steam flow to a condenser having a plurality of heat pipes, and passing the steam flow over the plurality of heat pipes. The heat pipes absorbing latent heat from the steam flow to form condensed water.

In accordance with yet another exemplary embodiment of the invention, a condenser fluidly connected to a steam turbine section includes a plurality of heat pipes configured to extract latent heat from steam passing from the steam turbine section to form condensed water.

### BRIEF DESCRIPTION OF THE DRAWINGS

There follows a detailed description of embodiments of the invention by way of example only with reference to the accompanying drawings, in which:

FIG. 1 is a schematic view of a combined cycle power plant including a condenser constructed in accordance with exemplary embodiments of the invention; and

FIG. 2 is a partially cut-away right perspective view of a condenser constructed in accordance with exemplary embodiments of the invention.

### DETAILED DESCRIPTION OF THE INVENTION

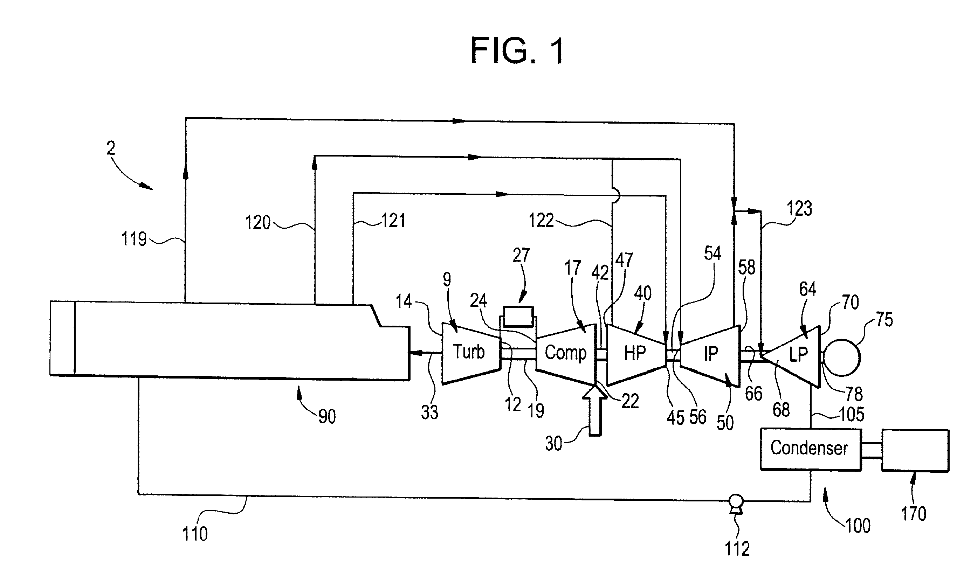

With initial reference to FIG. 1, a combined cycle power plant constructed in accordance with exemplary embodiments of the invention is indicated generally at 2. Power plant 2 includes a gas turbomachine system 4 operatively connected to steam turbomachine system 6. As shown, gas turbomachine system 4 includes a turbine 9 having an inlet portion 12 and an outlet portion 14. Turbine 9 is operatively connected to a compressor 17 via a shaft 19. Compressor 17 includes an inlet portion 22 and an outlet portion 24. Gas turbomachine system 4 further includes a combustor 27. With this arrangement, inlet air 30 passing into inlet portion 22 of compressor 17 is compressed, mixed with fuel from combustor 27 and ignited to form a high pressure, high temperate gas stream. The high temperature, high pressure gas stream is passed to turbine 9. Turbine 9 converts the high temperature, high pressure gas stream to rotational energy to produce work. In addition, the high temperature gases pass from outlet portion 14 of turbine 9 in the form of exhaust gases at a first temperature.

As further shown in FIG. 1, steam turbomachine system 6 includes a high pressure (HP) turbine section 40 operatively coupled to compressor 17 via a shaft 42. HP turbine section 40 includes an inlet or high pressure stage section 45 and an outlet or low pressure stage section 47. HP turbine section 40 is also operatively coupled to an intermediate pressure (IP) turbine section 50 via a shaft 54. In a manner similar to that describe above, IP turbine section 50 includes an inlet section 56 and an outlet section 58. Steam at outlet section 58 is at a lower pressure than steam at inlet section 56. In a manner also similar to that described above, IP turbine section 50 is also operatively connected to a low pressure (LP) turbine section 64 via a shaft 66. In a typical combined cycle power plant application LP turbine section 64 operates at a pressure of between approximately 60 psi -70 psi. Of course operating pressures both above 70 psi and below 60 psi could also employed. In any event, LP turbine section 64 includes an inlet section 68 and an outlet section 70, with steam at outlet section 70 being at a lower pressure at inlet section 68. LP turbine section 64 is operatively coupled to a generator 75 via a shaft 78. Steam turbomachine system 6 utilizes steam as a working fluid to drive generator 75. As will be discussed more fully below, power plant 2 is coupled to a heat recovery steam generator 90 that receives water from a condenser 100. More specifically, condenser 100 is fluidly connected to LP turbine section 64 via conduit 105 and to HRSG 90 via a conduit 110. Water is pumped via a water pump 112 from condenser 100 to HRSG 90. HRSG 90 heats water obtained from condenser 100 to form steam at various pressures. The steam is delivered back to steam turbomachine system 6 via steam conduits indicated at 119-123.

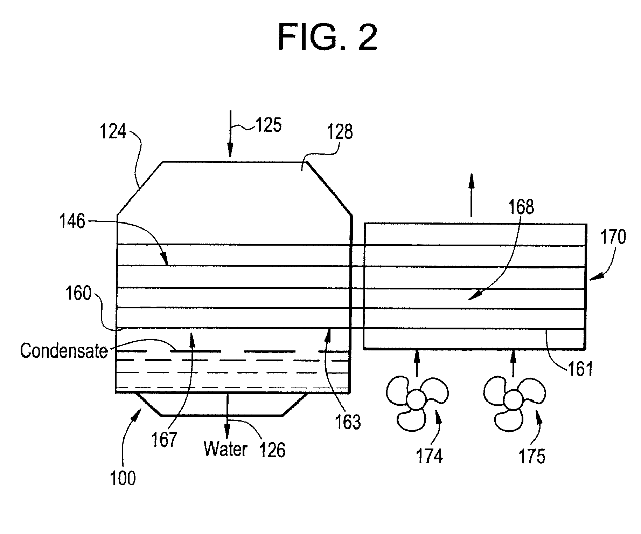

Reference will now be made to FIG. 2 in describing condenser 100 constructed in accordance with exemplary embodiments of the intention. As shown, condenser 100 includes a main body 124 that defines a vessel having an inlet 125, an outlet 126 and an interior chamber 128. In accordance with the exemplary embodiment shown, condenser 100 includes a plurality of heat pipes, indicated generally at 146, that are configured to absorb latent heat from a steam passing from LP turbine section 64. At this point it should be understood that the term "heat pipes" should be construed to mean sealed pipes or tubes made of a material with having a high thermal conductivity such as, but not limited to, copper, stainless steel and/or aluminum. A vacuum pump is used to exclude all fluids (both gases and liquids) from an interior of the seal pipes after which the pipes are filled with a fraction of a percent by volume of a working fluid or coolant such as, but not limited to, water, ethanol, acetone, sodium or mercury. The partial vacuum is near to or below the vapor pressure of the working fluid such that, some of the fluid will be in a liquid phase and some will be in a gas phase. A wick (not shown) capable of absorbing fluid is located within the sealed pipes. The thermal energy is transferred to the heat pipe by evaporating fluid in the wick. Other examples of heat pipes include sealed pipes having no internal working fluid. Instead, such heat pipes include "Qu-materials" (not separately labeled) having a very high thermal conductivity. The"Qu-material" is typically in the form of a coating provided on internal or interior surfaces (not separately labeled) of the heat pipes.

Each of the plurality of heat pipes 146 includes an external surface (not separately labeled), a first end portion 160 that extends through interior chamber 128, leading to a second end portion 161, arranged outside of the vessel, through an intermediate or heat exchange zone 163. Heat exchange zone 163 actually includes a first heat exchange portion 167, e.g., the portion of each of the plurality of heat pipes 146 located within interior chamber 128, and a second heat exchange portion 168, e.g., the portion of each of the plurality of heat pipes 146 located outside of interior chamber 128. In the embodiment show, second heat exchange portion 168 is arranged in a heat exchanger 170 positioned adjacent a pair of fans 174 and 175. With this arrangement, latent heat entrained in the steam passing from LP turbine section 64 flows over the external surface of heat pipes 146 and is absorbed by first heat exchange portion 163 to form condensed water. The heat is rapidly conducted though heat exchange zone 163 to second heat exchange portion 168. A convective airflow generated by fans 174 and 175 passes across the external surface of second heat exchange portion 168 to remove the heat. The water is passed to HRSG 90 and reheated by exhausts gases 33 to form additional steam that is passed back to various portions of steam turbomachine system 6.

At this point it should be appreciated that a condenser constructed in accordance with exemplary embodiments of the invention would be simple to build and be easy to maintain and provide enhanced heat removal efficiency. Moreover, the condenser in accordance with the exemplary embodiment would not require water as a coolant or any associated water handling/storage equipment. Finally, the condenser in accordance with exemplary embodiments of the invention can be constructed on a relatively small footprint.

In general, this written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of exemplary embodiments of the present invention if they have structural elements that do not differ from the literal language of the claims, or if they include equivalent structural elements with insubstantial differences from the literal language of the claims.

## Claims

1. A combined cycle power plant (2) comprising:
a steam turbine section (40, 64) including an inlet section (45, 56, 68) and an outlet section (47, 58, 70), the steam turbine section (40, 50, 64) passing steam from the inlet section (45, 56, 68) toward the outlet section (47, 58, 70); and
a condenser (100) fluidly connected to the outlet section (47, 58, 70) of the steam turbine section (40, 50, 64), the condenser (100) including a plurality of heat pipes (146) configured to extract heat from steam passing from the steam turbine section (40, 50, 64) to form condensed water.

2. The combined cycle power plant (2) according to claim 1, wherein the condenser (100) includes a vessel (124), each of the plurality of heat pipes (146) including a first end portion (160) extending into the vessel (103) and a second end portion (161) projecting out from the vessel (124).

3. The combined cycle power plant according to claim 2, further comprising: a fan (174, 175) directed at the condenser (100), the fan (174, 175) directing a forced airflow over the second end portion (161) of each of the plurality of heat pipes (146).

4. The combined cycle power plant according to any of claims 1 to 3, wherein at least a portion of the plurality of heat pipes (146) are hermetically sealed heat pipes that include a coolant in at least one of a liquid phase and a vapor phase.

5. The combined cycle power plant according to any of claims 1 to 4, wherein each of the plurality of heat pipes (146) includes an external surface and an internal surface, at least a portion of the plurality of heat pipes including a heat conductive coating on the internal surface.

6. The combined cycle power plant according to any of claims 1 to 5, wherein the condenser (100) does not include water as a coolant.

7. A method of extracting latent heat from a steam flow passing from a steam turbine section, the method comprising:
passing a steam flow from the steam turbine section;
guiding the steam flow to a condenser having a plurality of heat pipes; and
passing the steam flow over the plurality of heat pipes, the heat pipes absorbing heat from the steam flow to form condensed water.

8. The method of claim 7, further comprising: passing the condensed water to a heat recovery steam generator.

9. The method of claim 7 or 8, further comprising: passing the steam flow into a vessel, each of the plurality of heat pipes including a first end portion extending into the vessel and a second end portion projecting out from the vessel.

10. The method of claim 9, further comprising: passing a convective airflow over the second end portion of each of the plurality of heat pipes.

11. The method of any of claims 7 to 10, wherein, passing the steam from the steam turbine section comprises extracting steam from a low pressure (LP) steam turbine section.

12. The method of any of claims 7 to 11, wherein the heat pipes absorb latent heat from the steam flow.

13. A condenser fluidly connected to a steam turbine section, the condenser comprising:
a plurality of heat pipes configured to extract latent heat from steam passing from a steam turbine section to form condensed water.

14. The condenser according to claim 13, wherein the condenser includes a vessel, each of the plurality of heat pipes including a first end portion extending into the vessel that leads to a second end portion projecting out from the vessel.

15. The condenser according to claim 13 or 14, wherein the condenser is fluidly connected to a heat recovery steam generator.
